(19) Europäisches Patentamt / European Patent Office / Office européen des brevets

(11) **EP 2 880 588 B1**

(12) **FASCICULE DE BREVET EUROPEEN**

(45) Date de publication et mention de la délivrance du brevet:
**28.10.2020 Bulletin 2020/44**

(21) Numéro de dépôt: **13756638.6**

(22) Date de dépôt: **31.07.2013**

(51) Int Cl.:
*G06F 21/52* *(2013.01)*    *G06F 21/71* *(2013.01)*
*G06F 11/28* *(2006.01)*

(86) Numéro de dépôt international:
**PCT/FR2013/051854**

(87) Numéro de publication internationale:
**WO 2014/023894 (13.02.2014 Gazette 2014/07)**

(54) **SYSTEME DE DETECTION DE MODIFICATION D'UNE PILE D'APPEL DE SOUS-PROGRAMME**

SYSTEM ZUR ERKENNUNG DER MODIFIKATION EINES UNTERPROGRAMM-AUFRUFSTAPELS

SYSTEM FOR DETECTING A MODIFICATION OF A SUBPROGRAM CALL STACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2012 FR 1257635**

(43) Date de publication de la demande:
**10.06.2015 Bulletin 2015/24**

(73) Titulaire: **Rambus Inc.**
**Sunnyvale, CA 94089 (US)**

(72) Inventeur: **GALDO, Florian**
**13590 Meyreuil (FR)**

(74) Mandataire: **de Jong, Jean Jacques et al**
**Omnipat**
**24, place des Martyrs de la Résistance**
**13100 Aix en Provence (FR)**

(56) Documents cités:
**US-A1- 2003 182 572    US-B2- 7 669 243**

**Description**

**Domaine technique de l'invention**

L'invention est relative à la détection de modifications intempestives du contenu d'une pile d'appel de sous-programme dans un système processeur, notamment pour détecter des tentatives de fraude.

**État de la technique**

Une pile d'appel de sous-programme est une zone réservée de la mémoire d'un système processeur, servant à stocker l'adresse « de retour », adresse à laquelle doit continuer l'exécution d'un programme à la fin de l'exécution d'un sous-programme. Le terme imagé de « pile » reflète un mode de gestion « dernier entré-premier sorti » (LIFO) de la zone mémoire, qui est particulièrement bien adapté pour gérer l'imbrication des sous-programmes. Ainsi, on utilisera ci-après un langage imagé relatif à la gestion d'une pile, comme « mettre sur la pile », « empiler », « retirer de la pile »... sachant que le fonctionnement sous-jacent est en réalité obtenu par une gestion de pointeurs de lecture et d'écriture dans la zone mémoire.

Une modification intempestive de la pile d'appel peut provoquer, lorsque le sous-programme se termine, le saut de l'exécution du programme à un emplacement arbitraire, identifié par la valeur modifiée de la pile. La modification peut être due à une tentative de fraude, où le fraudeur cherche à détourner l'exécution vers un morceau de code malveillant ou bien à contourner des vérifications de sécurité.

Une modification de la pile peut être faite par attaque laser, en dirigeant un faisceau laser pulsé sur la zone mémoire de la pile, ou sur le bus de données au moment où la donnée de la pile est lue. On peut également perturber la valeur véhiculée par le bus en générant des impulsions sur la tension d'alimentation au moment de cette lecture.

Pour mieux illustrer ce problème, on considère le pseudo-code en langage C suivant :

```
void main(void)
{
    ...
    func1() ;
    ...
}
void func1(void)
{
    ...
    func2() ;
    ...
    return ;
}
void func2(void)
{ ...
    func3() ;
    ...
    VerifyPIN() ;
    ...
    return ;
}
void func3(void)
{
    ...
    return ;
}
void VerifyPIN(void)
{
    ...
    return ;
}
```

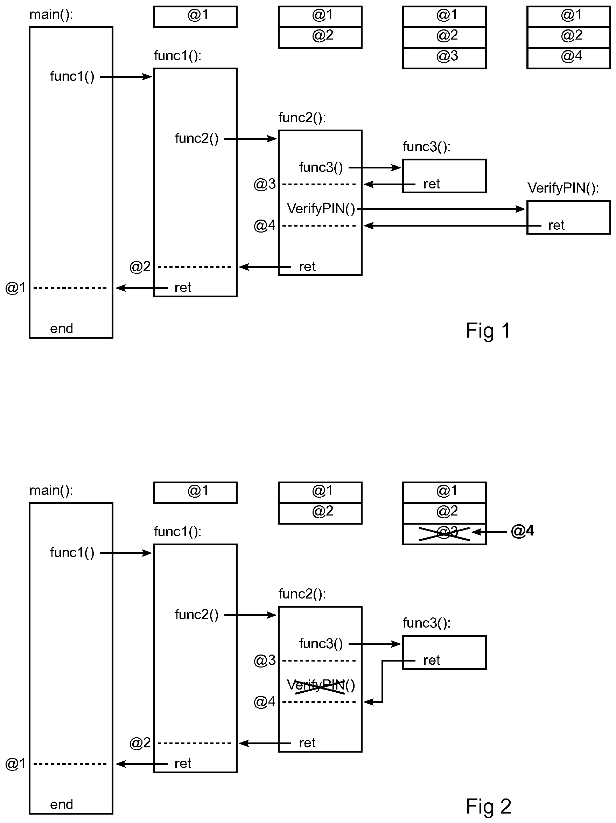

La figure 1 illustre l'exécution de ce pseudo-code. Le contenu de la pile d'appel est représenté au-dessus de chaque bloc illustrant l'exécution d'un sous-programme, ou fonction. On suppose que la pile se remplit par le bas dans cette représentation.

Au cours de son exécution, la fonction main() appelle une fonction func1() ; l'adresse de retour @1 est alors placée sur la pile, tandis que la fonction func1() est exécutée. La fonction func1() appelle une fonction func2() ; l'adresse de retour correspondante @2 est placée sur la pile. La fonction func2() appelle une fonction func3() ; une nouvelle adresse de retour @3 est placée sur la pile.

La fin de l'exécution de la fonction func3() est identifiée par l'exécution de l'instruction dédiée « return ». Cette instruction provoque le retrait de l'adresse @3 de la pile, et la poursuite de l'exécution à partir de cette adresse, en l'occurrence la poursuite de l'exécution de la fonction func2(). La fonction func2() appelle ensuite une fonction VerifyPIN(), dont le rôle est, par exemple, de vérifier la saisie d'un code secret. L'adresse de retour correspondante @4 est placée sur la pile.

Lorsque l'exécution de la fonction VerifyPIN() se termine, l'adresse @4 est retirée de la pile et l'exécution se poursuit à partir de cette adresse, en l'occurrence dans la fonction func2().

Au fur et à mesure que l'exécution des fonctions se termine, les adresses de retour sont retirées de la pile, et l'exécution revient à l'adresse @1, dans la fonction main().

A la figure 2, au cours de l'exécution de la fonction func3(), un fraudeur modifie la dernière adresse de la pile @3. Il parvient à la remplacer par l'adresse @4, qui est l'adresse de retour de la fonction VerifyPIN(). Ainsi, dès que l'exécution de la fonction func3() se termine, l'exécution se poursuit à l'adresse @4. La fonction VerifyPIN(), servant à vérifier la saisie d'un code secret, est ainsi contournée.

Il n'est pas nécessaire que le fraudeur connaisse l'adresse exacte @4 de retour de la fonction qu'il souhaite contourner. Il suffit qu'il trouve par tâtonnement une adresse arbitraire au-delà de cette adresse de retour, qui ne provoque pas d'erreur du fait de l'absence d'exécution de la portion de code se trouvant entre l'adresse de retour et l'adresse arbitraire.

Diverses solutions sont connues pour éviter ce type de tentative de fraude. Par exemple, le brevet US7581089 propose d'utiliser deux piles d'appel redondantes. Chaque adresse de retour est placée sur les deux piles lors des appels de sous-programmes. A la fin de l'exécution d'un sous-programme, on vérifie que la même adresse de retour se trouve dans les deux piles. Bien qu'un fraudeur puisse parvenir à modifier les adresses contenues dans les deux piles, les chances de succès de telles modifications restent plutôt aléatoires : il est particulièrement difficile de modifier les deux piles simultanément de la même façon.

Le brevet US2003/182572 propose l'utilisation d'un emplacement mémoire pour chaque fonction d'un programme et d'opération OU-exclusif du contenu dudit emplacement mémoire avec l'adresse de retour lors de l'appel de la fonction ainsi q'à la fin de la fonction, avec l'adresse du sommet de la pile.

Bien que cette solution soit efficace, elle demande une complexité supplémentaire qui accroît la surface du circuit, et réduit ses performances.

## Résumé de l'invention

On souhaite donc disposer d'une solution de faible complexité pour détecter des modifications du contenu de la pile d'appel de sous-programme.

On tend à satisfaire ce besoin en prévoyant un procédé de détection de modification d'une pile d'appel de sous-programme, comprenant les étapes consistant à, lors d'un appel d'un sous-programme, placer une adresse de retour au sommet de la pile ; à la fin du sous-programme, utiliser l'adresse au sommet de la pile comme adresse de retour, et retirer l'adresse de la pile ; lors de l'appel du sous-programme, accumuler l'adresse de retour dans un emplacement mémoire selon une première opération ; à la fin du sous-programme, accumuler l'adresse du sommet de la pile dans l'emplacement mémoire selon une deuxième opération, réciproque de la première ; et détecter une modification lorsque le contenu de l'emplacement mémoire diffère de sa valeur initiale.

Selon un mode de mise en œuvre, les première et deuxième opérations sont l'opération OU-exclusif bit à bit.

Selon un mode de mise en œuvre, les première et deuxième opérations sont l'addition et la soustraction.

Selon un mode de mise en œuvre, l'adresse de retour et l'adresse du sommet de la pile sont des valeurs prélevées sur un bus mémoire lors de phases d'accès à la pile.

Selon un mode de mise en œuvre, la valeur initiale est aléatoire.

On prévoit également un dispositif de détection de modification d'une pile d'appel de sous-programme, adapté à exécuter le procédé selon la revendication 1, comprenant, associés à un processeur, un emplacement mémoire stockant une valeur initiale, accessible en lecture et écriture par des instructions de programme ; un opérateur configuré pour remplacer la valeur de l'emplacement mémoire par le résultat d'une opération entre le contenu de l'emplacement mémoire et une valeur courante échangée avec la pile d'appel ; et un circuit de détection configuré pour identifier l'instruction en cours d'exécution et, si l'instruction identifiée est un appel de sous-programme, commander l'opérateur pour effectuer un premier type d'opération, et si l'instruction identifiée est un retour de sous-programme, commander l'opérateur pour effectuer un deuxième type d'opération, réciproque du premier type.

**Description sommaire des dessins**

Des modes de réalisation seront exposés dans la description suivante, faite à titre non limitatif en relation avec les figures jointes parmi lesquelles :

- la figure 1, précédemment décrite, représente une exécution d'un exemple de pseudo-code, illustrant l'évolution du contenu de la pile d'appels ;

- la figure 2, précédemment décrite, illustre une tentative de fraude dans l'exécution de la figure 1 ; et

- la figure 3 représente un mode de réalisation de dispositif de détection de modification de la pile d'appels.

**Description d'un mode de réalisation préféré de l'invention**

Dans la figure 1, entre l'appel de la fonction func1() dans le programme main(), et le retour de cette fonction, on empile au cours des appels de fonction successifs les adresses @1, @2, @3, et @4 sur la pile d'appels. Pendant cette même phase, au cours des retours de fonction successifs, on retire les adresses @3, @4, @2 et @1 de la pile.

On remarque que les séquences d'empilement et de retrait comportent les mêmes adresses. L'ordre de la séquence de retrait n'est pas forcément l'ordre inverse de la séquence d'empilement, comme le montrent les adresses @3 et @4, du fait qu'on peut appeler plusieurs sous-programmes dans une même fonction. Il subsiste néanmoins la propriété qu'une même adresse apparaît deux fois sur le bus d'accès à la pile, une fois en écriture et une fois en lecture.

Afin de détecter une modification de la pile d'appels, ou des valeurs véhiculées sur le bus d'accès à cette pile, on propose de vérifier, au moins pour une partie de programme estimée critique par le programmeur, que chaque adresse de la pile apparaît deux fois sur le bus d'accès entre l'appel et le retour du sous-programme.

Pour effectuer une telle vérification, une solution consisterait à stocker la séquence complète d'adresses écrites et lues dans la pile, afin de vérifier à la fin que chaque adresse s'y trouve un nombre pair de fois. Cette solution est peu efficace.

On préfère utiliser une opération récursive effectuée à chaque écriture et lecture dans la pile pour accumuler les adresses successives dans un emplacement mémoire dédié, de préférence un registre. L'opération récursive est telle que la deuxième opération faite sur une même adresse annule l'effet de la première opération faite sur l'adresse.

On peut pour cela utiliser deux opérations réciproques, l'une utilisée à chaque écriture, et l'autre utilisée à chaque lecture. La première opération est par exemple l'addition, et la deuxième la soustraction.

Dans l'exemple de la figure 1, en mettant en œuvre la vérification pour la fonction func1() dans le programme main(), le contenu accumulé dans le registre, initialisé à une valeur $REG_0$, vaudrait :

$$REG = REG_0 + @1 + @2 + @3 - @3 + @4 - @4 - @2 - @1$$

$$= REG_0.$$

Si tout se passe normalement, le contenu du registre est rétabli à sa valeur initiale $REG_0$ au retour dans le programme main().

Dans l'exemple de la figure 2, le contenu du registre vaudrait :

$$REG = REG_0 + @1 + @2 + @3 - @4 - @2 - @1$$

$$= REG_0 + @3 - @4 \neq REG_0.$$

Le fait que le contenu du registre soit différent du contenu initial au retour de la fonction func1() indique qu'une adresse de la pile a été modifiée.

On constate que cette procédure « protège » l'ensemble des sous-programmes imbriqués sous la fonction func1() : il suffit que l'une quelconque des adresses de retour de ces sous-programmes soit modifiée pour que la vérification échoue.

Selon une variante, la première opération pourrait être la multiplication, et la deuxième la division.

On préfère toutefois utiliser une opération unique qui est la réciproque d'elle-même : l'opération OU-exclusif bit à bit. Cette opération a par ailleurs l'avantage d'être rapide et simple à mettre en œuvre de manière matérielle.

La valeur initiale $REG_0$ est de préférence aléatoire, et régénérée à chaque appel de la fonction à vérifier. Si elle était fixe, le fraudeur pourrait être tenté de modifier le contenu du registre par attaque laser, afin de le rétablir à sa valeur initiale au moment où le retour du sous-programme a lieu.

Il n'est pas utile de mettre en œuvre de telles vérifications de manière systématique, par exemple pour tout appel de sous-programme dans le programme main(). Cela pourrait même être inefficace. En effet, une fonction utile pour le fraudeur pourrait se trouver à plusieurs niveaux d'imbrication sous le programme main(). Dans ce cas, la fraude est détectée au retour dans le programme main(), mais seulement après l'exécution de la fonction utile pour le fraudeur.

Ainsi, il est souhaitable que le programmeur identifie les sous-programmes critiques et les protège individuellement à un niveau d'imbrication adéquat. Pour cela, le registre REG est rendu accessible par logiciel, permettant au programmeur d'insérer avant l'appel du sous-programme à protéger des instructions d'initialisation du registre et, après le retour du sous-programme, des instructions pour lire le contenu du registre et vérifier s'il a changé. Par exemple, si on souhaite protéger la fonction func2() (donc toutes les fonctions imbriquée sous la fonction func2()) dans la figure 1, on pourrait utiliser le pseudo-code suivant dans la définition de la fonction func1() :

```
void func1(void)
{
        …
        REG₀ := RAND();
        REG := REG₀;
        func2();
        IF REG <> REG₀ THEN Alert();
        …
        return;

}
```

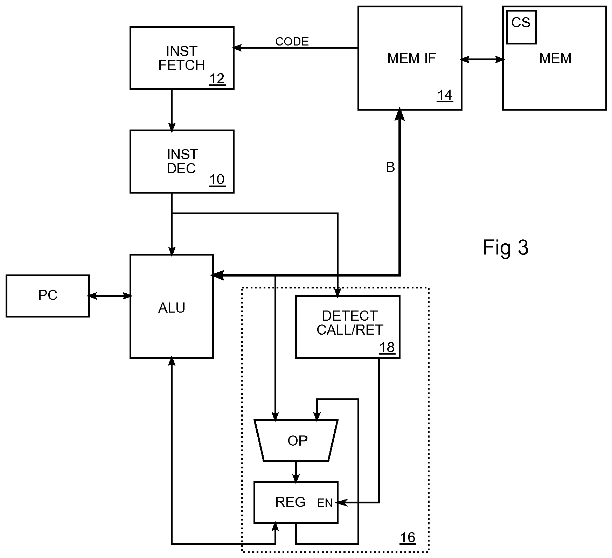

La figure 3 représente schématiquement un mode de réalisation de dispositif de vérification associé à un processeur. Le processeur comprend une unité arithmétique et logique ALU qui est commandée par un décodeur d'instruction 10. Le décodeur 10 reçoit des codes d'instruction par une unité d'acquisition d'instructions 12. Une interface mémoire 14 fournit, à partir d'une mémoire centrale MEM, des codes d'instruction à l'unité 12. L'instruction courante à chercher dans la mémoire est identifiée par l'adresse contenue dans un registre dédié PC dit « compteur de programme », adresse que l'unité ALU communique à l'interface mémoire 14 par un bus B. Le bus B sert par ailleurs à l'échange de données entre l'unité ALU et la mémoire MEM.

La pile d'appel de sous-programme CS est matérialisée dans une zone réservée de la mémoire MEM. Les données qu'elle stocke sont des adresses pointant dans une zone de la mémoire MEM contenant les instructions du programme à exécuter.

Un appel de sous-programme est opéré par l'exécution d'une instruction CALL dans l'unité ALU. L'unité ALU calcule et met sur la pile l'adresse de retour, généralement l'adresse de l'instruction se trouvant immédiatement après l'appel, définie par exemple en ajoutant un décalage fixe à la valeur courante du compteur de programme PC. Par ailleurs, l'instruction CALL véhicule en tant que paramètre l'adresse de la première instruction du sous-programme ; l'unité ALU met à jour le compteur de programme PC avec cette adresse.

Le retour d'un sous-programme est opéré par l'exécution d'une instruction RET. L'unité ALU retire alors la dernière adresse de la pile et met à jour le compteur de programme PC avec cette adresse.

On remarque que l'adresse mise sur la pile à l'exécution de l'instruction CALL et l'adresse retirée de la pile à l'exécution de l'instruction RET sont présentes à tour de rôle sur les lignes de données du bus B, en écriture pour la première, et en lecture pour la seconde.

Le dispositif de vérification, 16, comprend un registre REG servant à accumuler ces adresses écrites et lues dans la pile d'appel. L'accumulation est faite à l'aide d'un opérateur OP, configuré pour calculer de préférence un OU-exclusif bit à bit entre le contenu du registre REG et la valeur présente sur les lignes de données du bus B.

Un circuit de détection 18 est prévu pour identifier si l'instruction en cours d'exécution est un appel ou un retour de sous-programme. Il reçoit pour cela le code d'instruction disponible dans le décodeur d'instruction 10. A chaque fois qu'une telle instruction est détectée, le circuit 18 valide (EN) une accumulation dans le registre REG. Si on choisit d'utiliser des opérations réciproques autres que OU-exclusif, le circuit 18 sélectionne également l'opération selon que l'instruction est un appel ou un retour.

Le contenu du registre REG est accessible en écriture et lecture par l'intermédiaire de l'unité ALU, comme le contenu de registres de travail typiquement prévus dans un processeur. Le registre REG devient ainsi accessible par des instructions de programme.

De nombreuses variantes et modifications des modes de réalisation décrits apparaîtront à l'homme du métier. On a notamment exposé un partitionnement logiciel/matériel préférentiel des fonctions à réaliser - il est évident que d'autres partitionnements sont possibles en fonction du compromis vitesse/surface de silicium que l'on souhaite réaliser. La terminologie « sous-programme » ou « fonction » utilisée dans la présente demande est censée être générique et vise toute portion de programme que l'on exécute par un mécanisme de saut et retour utilisant une pile servant à stocker les adresses de retour.

**Revendications**

1. Procédé de détection de modification d'une pile d'appel de sous-programme, comprenant les étapes suivantes pour chaque sous-programme d'une succession de sous-programmes imbriqués à partir d'un sous-programme initial :

   • lors d'un appel d'un sous-programme courant, placer une adresse de retour au sommet de la pile ; et
   • à la fin du sous-programme courant, utiliser l'adresse au sommet de la pile comme adresse de retour, et retirer l'adresse de la pile ;

   **caractérisé en ce qu'**il comprend les étapes suivantes :

   • associer un emplacement mémoire unique (REG) à la succession de sous-programmes ;
   • sauvegarder la valeur initiale de l'emplacement mémoire avant l'appel du sous-programme initial ;
   • lors de l'appel du sous-programme courant, accumuler l'adresse de retour dans l'emplacement mémoire (REG) selon une première opération (OP) ;
   • à la fin du sous-programme courant, accumuler l'adresse du sommet de la pile dans l'emplacement mémoire selon une deuxième opération, réciproque de la première ; et
   • au retour du sous-programme initial, détecter une modification lorsque le contenu de l'emplacement mémoire diffère de la valeur initiale.

2. Procédé selon la revendication 1, dans lequel les première et deuxième opérations sont l'opération OU-exclusif bit à bit.

3. Procédé selon la revendication 1, dans lequel les première et deuxième opérations sont l'addition et la soustraction.

4. Procédé selon la revendication 1, dans lequel l'adresse de retour et l'adresse du sommet de la pile sont des valeurs prélevées sur un bus mémoire lors de phases d'accès à la pile.

5. Procédé selon la revendication 1 à 4, dans lequel la valeur initiale ($REG_0$) est aléatoire.

6. Dispositif adapté à exécuter le procédé selon la revendication 1, comprenant un processeur et un dispositif de vérification, le dispositif comprenant :

   • un emplacement mémoire (REG) stockant une valeur initiale, accessible en lecture et écriture par des instructions de programme ;
   • un opérateur (OP) configuré pour remplacer la valeur de l'emplacement mémoire par le résultat d'une opération entre le contenu de l'emplacement mémoire et une valeur courante échangée avec la pile d'appel ; et
   • un circuit de détection (18) configuré pour identifier l'instruction en cours d'exécution et :

      - si l'instruction identifiée est un appel de sous-programme (CALL), commander l'opérateur pour effectuer un premier type d'opération, et
      - si l'instruction identifiée est un retour de sous-programme (RET), commander l'opérateur pour effectuer un deuxième type d'opération, réciproque du premier type.

7. Dispositif selon la revendication 6, dans lequel les premier et deuxième types d'opération sont l'opération OU-exclusif.

8. Dispositif selon la revendication 6, dans lequel les premier et deuxième types d'opération sont l'addition et la soustraction.

**Patentansprüche**

1. Verfahren zum Erkennen der Modifikation eines Unterprogramm-Aufrufstapels, umfassend die folgenden Schritte für jedes Unterprogramm einer Folge von Unterprogrammen, die ausgehend von einem anfänglichen Unterprogramm verschachtelt sind:

   • wenn ein aktuelles Unterprogramm aufgerufen wird, Platzieren einer Rücksprungadresse an der Spitze des Stapels; und
   • am Ende des aktuellen Unterprogramms, Verwenden der Adresse an der Spitze des Stapels als Rücksprungadresse und Entfernen der Adresse vom Stapel;

   **dadurch gekennzeichnet, dass** es die folgenden Schritte umfasst:

   • Verknüpfen einer einzelnen Speicherstelle (REG) mit der Folge von Unterprogrammen;
   • Speichern des Anfangswertes der Speicherstelle vor dem Aufruf des anfänglichen Unterprogramms;
   • beim Aufruf des aktuellen Unterprogramms, Akkumulieren der Rücksprungadresse in der Speicherstelle (REG) gemäß einer ersten Operation (OP);
   • am Ende des aktuellen Unterprogramms, Akkumulieren der Adresse an der Spitze des Stapels in der Speicherstelle gemäß einer zweiten Operation, die der Kehrwert der ersten ist; und
   • bei der Rückkehr des anfänglichen Unterprogramms, Erkennen einer Änderung, wenn der Inhalt der Speicherstelle vom Anfangswert abweicht.

2. Verfahren nach Anspruch 1, wobei die erste und die zweite Operation die bitweise Exklusiv-ODER-Operation sind.

3. Verfahren nach Anspruch 1, wobei die erste und die zweite Operation Addition und Subtraktion sind.

4. Verfahren nach Anspruch 1, wobei die Rücksprungadresse und die Adresse an der Spitze des Stapels Werte sind, die während der Stapelzugriffsphasen aus einem Speicherbus entnommen werden.

5. Verfahren nach Anspruch 1 bis 4, wobei der Anfangswert ($REG_0$) zufällig ist.

6. Vorrichtung zur Durchführung des Verfahrens nach Anspruch 1, umfassend einen Prozessor und eine Verifizierungsvorrichtung, wobei die Vorrichtung Folgendes umfasst:

   • eine Speicherstelle (REG), die einen Anfangswert speichert und über Programmbefehle zum Lesen und Schreiben zugänglich ist;
   • einen Operator (OP), der so konfiguriert ist, dass er den Wert der Speicherstelle durch das Ergebnis einer Operation zwischen dem Inhalt der Speicherstelle und einem mit dem Aufrufstapel ausgetauschten aktuellen Wert ersetzt; und
   • eine Erkennungsschaltung (18), die zum Identifizieren des gerade ausgeführten Befehls konfiguriert ist, und

   - wenn der identifizierte Befehl ein Unterprogrammaufruf (CALL) ist, den Operator so steuert, dass er einen ersten Typ von Operation ausführt, und
   - wenn der identifizierte Befehl ein Unterprogrammrücklauf (RET) ist, Veranlassen des Operators, einen zweiten, reziproken Typ von Operation des ersten Typs auszuführen.

7. Vorrichtung nach Anspruch 6, wobei die erste und zweite Art der Operation die Exklusiv-ODER-Operation ist.

8. Vorrichtung nach Anspruch 6, wobei der erste und zweite Operationstyp Addition und Subtraktion sind.

**Claims**

1. Method for detecting a modification of a subroutine call stack, comprising the following steps for each subroutine of a series of subroutines nested in an initial subroutine:

   • when calling a current subroutine, placing a return address at the top of the stack; and
   • at the end of the current subroutine, using the address at the top of the stack as the return address, and removing the address from the stack;

**characterized in that** the method comprises the following steps:

- assigning a single memory location (REG) to the series of subroutines;
- saving an initial value of the memory location before calling the initial subroutine;
- when calling the current subroutine, accumulating the return address in the memory location (REG) according to a first operation (OP);
- at the end of the current subroutine, accumulating the address from the top of the stack in the memory location according to a second operation which is reciprocal of the first operation; and
- on returning from the initial subroutine, detecting a modification when the contents of the memory location differ from the initial value.

2. Method according to claim 1, wherein the first and second operations are a bitwise OR-exclusive operation.

3. Method according to claim 1, wherein the first and second operations are addition and subtraction.

4. Method according to claim 1, wherein the return address and the address from the top of the stack are values taken from a memory bus during phases of access to the stack.

5. Method according to any of claims 1 to 4, wherein the initial value ($REG_0$) is random.

6. Device for executing the method according to claim 1, comprising a processor and a verification device, the device comprising:

- a memory location (REG) storing an initial value which is readable and writable by means of program instructions;
- an operator (OP) designed to replace the value in the memory location with the result of an operation between the contents of the memory location and a current value exchanged with the call stack; and
- a detection circuit (18) designed to identify the instruction being executed, and:

  - if the identified instruction is a subroutine call (CALL), to command the operator to perform a first type of operation; and
  - if the identified instruction is a subroutine return (RET), to command the operator to perform a second type of operation which is reciprocal of the first type.

7. Device according to claim 6, wherein the first and second types of operation are an OR-exclusive operation.

8. Device according to claim 6, wherein the first and second types of operation are addition and subtraction.

main():

@1

| @1 |
|----|
| @2 |

| @1 |
|----|
| @2 |
| @3 |

| @1 |
|----|
| @2 |
| @4 |

func1():

func1() →

func2():

func2() →

func3():

func3() →

ret

@3 ---------

VerifyPIN() →

VerifyPIN():

ret

@4 ---------

@2 --------- ← ret

@1 --------- ← ret

end

Fig 1

main():

@1

| @1 |
|----|
| @2 |

| @1 |
|----|
| @2 |

| @1 |
|----|
| @2 |
| ~~@3~~ | ← @4

func1():

func1() →

func2():

func2() →

func3():

func3() →

ret

@3 ---------

~~VerifyPIN()~~

@4 ---------

@2 --------- ← ret

@1 --------- ← ret

end

Fig 2

Fig 3

**EP 2 880 588 B1**

**RÉFÉRENCES CITÉES DANS LA DESCRIPTION**

**Documents brevets cités dans la description**

- US 7581089 B
- US 2003182572 A